# DEMANDE DE BREVET EUROPEEN

(11) **EP 4 667 352 A1**
(43) Date de publication de la demande: **24.12.2025**
(21) Numéro de dépôt: 25183934.6
(22) Date de dépôt: 19.06.2025
(51) Int. Cl.: B64C 3/56, B64D 15/04

(54) **AILE POUR UN AÉRONEF ET COMPORTANT UN SYSTÈME DE DÉGIVRAGE**

(30) Priorité: 21.06.2024 FR 2406720
(71) Demandeur: AIRBUS OPERATIONS (S.A.S.), 31060 Toulouse (FR)
(72) Inventeur: CREBASSOL, Florent, 31060 TOULOUSE (FR)
(74) Mandataire: Cabinet Le Guen Maillet

(57) **Abrégé**

L'invention concerne une aile (100) comportant une aile fixe (102), un bout d'aile (104) monté articulé sur l'aile fixe (102) entre une position abaissée et une position relevée et un système de dégivrage (150) comportant un conduit (152) circulant à l'intérieur du bout d'aile (104), une conduite d'alimentation (154) connectée entre le conduit (152) et une source d'air chaud, où ladite conduite d'alimentation (154) présente une conduite intermédiaire (154a) qui passe d'une extrémité distale (102b) de l'aile fixe (102) à une extrémité proximale (104a) du bout d'aile (104) et des moyens de commande (156) arrangés pour réguler la quantité d'air chaud passant dans la conduite d'alimentation (154).

Avec un tel arrangement, il est aisé de dégivrer le bout d'aile en vol et en position relevée.

## Description

### DOMAINE TECHNIQUE

La présente invention concerne une aile pour un aéronef qui comporte une aile fixe et un bout d'aile monté articulé à l'extrémité de l'aile fixe et un système de dégivrage intégré au bout d'aile. La présente invention concerne également un aéronef comportant au moins une telle aile.

### ÉTAT DE LA TECHNIQUE ANTÉRIEURE

Pour un gain de place, en particulier lors des manœuvres sur un tarmac, certains aéronefs comportent des ailes pliables. Une telle aile comporte une aile fixe qui présente une extrémité proximale fixée au fuselage et une extrémité distale, et un bout d'aile qui présente une extrémité distale et une extrémité proximale montée articulée sur l'aile fixe au niveau de l'extrémité distale de ladite aile fixe. Classiquement, lorsque l'aéronef est au sol, le bout d'aile est relevé et se positionne au-dessus de l'extrémité distale de l'aile fixe.

En cas de gel sur les ailes, un fluide de dégivrage est vaporisé au-dessus des ailes, mais lorsque le bout d'aile est relevé, le fluide de dégivrage peut avoir du mal à atteindre toute la surface dudit bout d'aile, en particulier l'extrados qui se retrouve en dessous, ce qui peut entraîner un retard dans le dégel du bout d'aile. En outre, lorsque le bout d'aile est relevé, le fluide de dégivrage s'écoule le long du bout d'aile du fait de son orientation verticale, limitant sa durée de présence sur le bout d'aile et donc son efficacité, pouvant limiter le pouvoir de dégivrage du fluide.

Les documents US 2 820 601 et US 2011/031353 divulguent des ailes de l'état de la technique.

Il est donc souhaitable de trouver un arrangement qui procure des améliorations et permet un dégivrage du bout d'aile, même lorsqu'il est relevé.

### EXPOSÉ DE L'INVENTION

Un objet de la présente invention est de proposer une aile qui comporte une aile fixe et un bout d'aile articulé et qui est équipée d'un système de dégivrage disposé sur le bout d'aile.

À cet effet, est proposée une aile pour un aéronef, ladite aile comportant :
- une aile fixe présentant une extrémité proximale destinée à être fixée à une structure de l'aéronef et une extrémité distale,
- un bout d'aile présentant une extrémité distale et une extrémité proximale montée articulée au niveau de l'extrémité distale de l'aile fixe, où le bout d'aile est mobile entre une position abaissée, dans laquelle le bout d'aile prolonge l'aile fixe et une position relevée, dans laquelle le bout d'aile est relevé, et
- un système de dégivrage comportant un conduit circulant à l'intérieur du bout d'aile, une conduite d'alimentation fluidiquement connectée audit conduit et destinée à être fluidiquement connectée à une source d'air chaud, où ladite conduite d'alimentation présente une conduite intermédiaire qui passe de l'extrémité distale de l'aile fixe à l'extrémité proximale du bout d'aile et des moyens de commande arrangés pour réguler la quantité d'air chaud passant dans la conduite d'alimentation.

Avec un tel arrangement le bout d'aile peut être dégivré en vol ou au sol, y compris lorsque le bout d'aile est en position relevée.

Avantageusement, au niveau de son intrados, le bout d'aile est percé de perçages par lesquels le conduit débouche à l'extérieur du bout d'aile.

Selon un mode de réalisation particulier, la conduite intermédiaire comporte une première portion intermédiaire montée au niveau de l'extrémité distale de l'aile fixe, une deuxième portion intermédiaire montée au niveau de l'extrémité proximale du bout d'aile et une section intermédiaire en arc de cercle dont une première extrémité est montée articulée au niveau de la première portion intermédiaire et dont une deuxième extrémité est montée articulée au niveau de la deuxième portion intermédiaire.

Selon un mode de réalisation particulier, la conduite intermédiaire comporte une première portion intermédiaire montée au niveau de l'extrémité distale de l'aile fixe, une deuxième portion intermédiaire montée au niveau de l'extrémité proximale du bout d'aile et au moins deux sections intermédiaires en arc de cercle, où une première section intermédiaire présente une première extrémité montée articulée au niveau de la première portion intermédiaire, où une dernière section intermédiaire présente une deuxième extrémité montée articulée au niveau de la deuxième portion intermédiaire, où pour deux sections intermédiaires voisines, la section intermédiaire de rang inférieur présente une deuxième extrémité montée articulée au niveau d'une première extrémité de la section intermédiaire de rang supérieur. Avantageusement, pour chaque section intermédiaire, la conduite d'alimentation comporte un bras dont une extrémité distale est solidaire de la section intermédiaire et dont une extrémité proximale est montée mobile en rotation autour de l'axe de charnière.

Selon un mode de réalisation particulier, la conduite intermédiaire prend la forme d'un tube à soufflet dont une première extrémité est montée au niveau de l'extrémité distale de l'aile fixe et dont une deuxième extrémité est montée au niveau de l'extrémité proximale du bout d'aile.

Selon un mode de réalisation particulier, la conduite intermédiaire comporte un tube intérieur souple dont une première extrémité est montée au niveau de l'extrémité distale de l'aile fixe et dont une deuxième extrémité est montée au niveau de l'extrémité proximale du bout d'aile et un tube de protection dont une première extrémité est montée au niveau de l'extrémité distale de l'aile fixe et dont une deuxième extrémité est montée au niveau de l'extrémité proximale du bout d'aile et dans lequel le tube intérieur est inséré, où le tube de protection est un tube télescopique.

Selon un mode de réalisation particulier, la conduite intermédiaire comporte une première portion intermédiaire montée au niveau de l'extrémité distale de l'aile fixe et une deuxième portion intermédiaire montée au niveau de l'extrémité proximale du bout d'aile, chaque portion intermédiaire présente une partie en arc de cercle coaxiale par rapport à l'axe de charnière et une partie en arc de cercle est logée dans l'autre partie en arc de cercle. L'invention propose également un aéronef comportant une structure et une aile selon l'une des variantes précédentes, où l'extrémité proximale de l'aile fixe est fixée à la structure.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de dessus d'un aéronef comportant une aile selon l'invention,
Fig. 2 est une représentation schématique en perspective d'une aile selon l'invention avec le bout d'aile en position abaissée,
Fig. 3 est une vue de face de l'aile selon l'invention avec le bout d'aile en position relevée avec un système de dégivrage selon l'invention,
Fig. 4 est une vue de face et en coupe d'une conduite intermédiaire selon un premier mode de réalisation et mise en œuvre dans le système de dégivrage selon l'invention et en position abaissée,
Fig. 5 est une vue de face et en coupe de la conduite intermédiaire de la Fig. 4 en position relevée,
Fig. 6 est une vue de face et en coupe d'une conduite intermédiaire selon un deuxième mode de réalisation et mise en œuvre dans le système de dégivrage selon l'invention et en position abaissée,
Fig. 7 est une vue de face et en coupe de la conduite intermédiaire de la Fig. 6 en position relevée,
Fig. 8 est une vue de face d'une conduite intermédiaire selon un troisième mode de réalisation et mise en œuvre dans le système de dégivrage selon l'invention et en position relevée,
Fig. 9 est une vue de face d'une conduite intermédiaire selon un quatrième mode de réalisation et mise en œuvre dans le système de dégivrage selon l'invention et en position relevée, et
Fig. 10 est une vue de face et en coupe d'une conduite intermédiaire selon un cinquième mode de réalisation et mise en œuvre dans le système de dégivrage selon l'invention et en position abaissée.

### EXPOSÉ DÉTAILLÉ DE MODES DE RÉALISATION

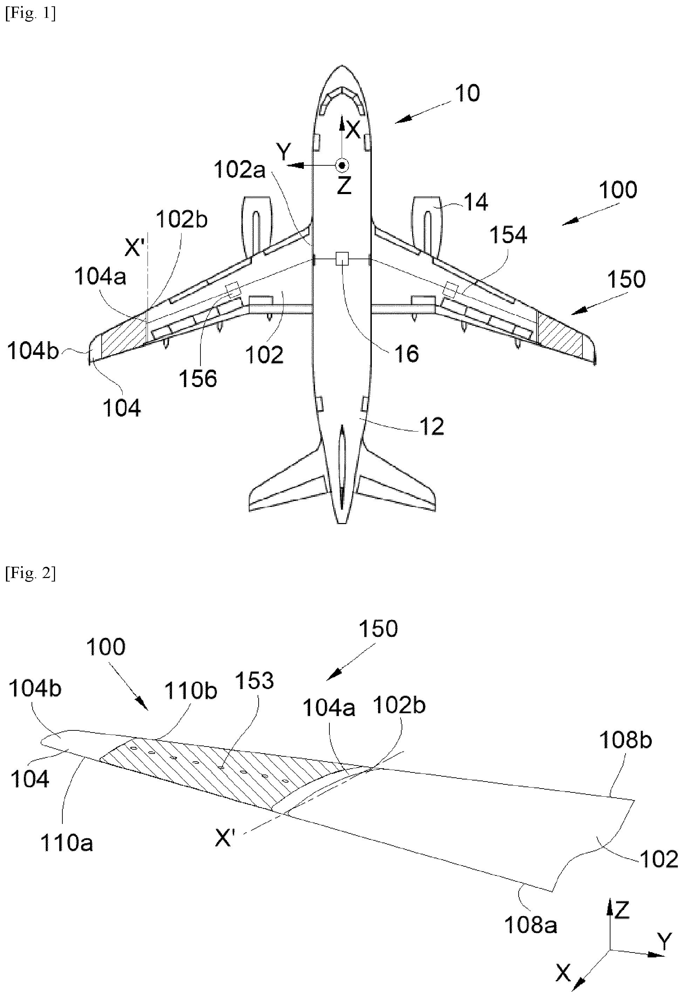

La Fig. 1 montre un aéronef 10 comportant un fuselage 12 de part et d'autre duquel est fixée une aile 100. Ici, chaque aile 100 supporte un moteur 14.

Dans la description qui suit, et par convention, on appelle X l'axe longitudinal de l'aéronef 10 orienté positivement dans le sens d'avancement de l'aéronef 10, on appelle Y l'axe transversal qui est horizontal lorsque l'aéronef 10 est au sol, et Z l'axe vertical lorsque l'aéronef 10 est au sol, ces trois directions X, Y et Z étant orthogonales entre elles.

La Fig. 2 montre une aile 100 selon l'invention qui comporte une aile fixe 102 et un bout d'aile 104 monté articulé sur l'aile fixe 102. L'aile fixe 102 est globalement horizontale.

De manière plus précise, l'aile fixe 102 présente une extrémité proximale 102a qui est fixée à une structure de l'aéronef 10, comme par exemple une structure du fuselage 12. L'aile fixe 102 présente également une extrémité distale 102b qui est à l'opposé de l'extrémité proximale 102a.

Le bout d'aile 104 présente une extrémité proximale 104a qui est montée articulée au niveau de l'extrémité distale 102b de l'aile fixe 102. Le bout d'aile 104 présente également une extrémité distale 104b qui est à l'opposé de l'extrémité proximale 104a et qui forme l'extrémité libre de l'aile 100.

Classiquement l'aile fixe 102 et le bout d'aile 104 présentent chacun un bord d'attaque 108a, 110a et un bord de fuite 108b, 110b.

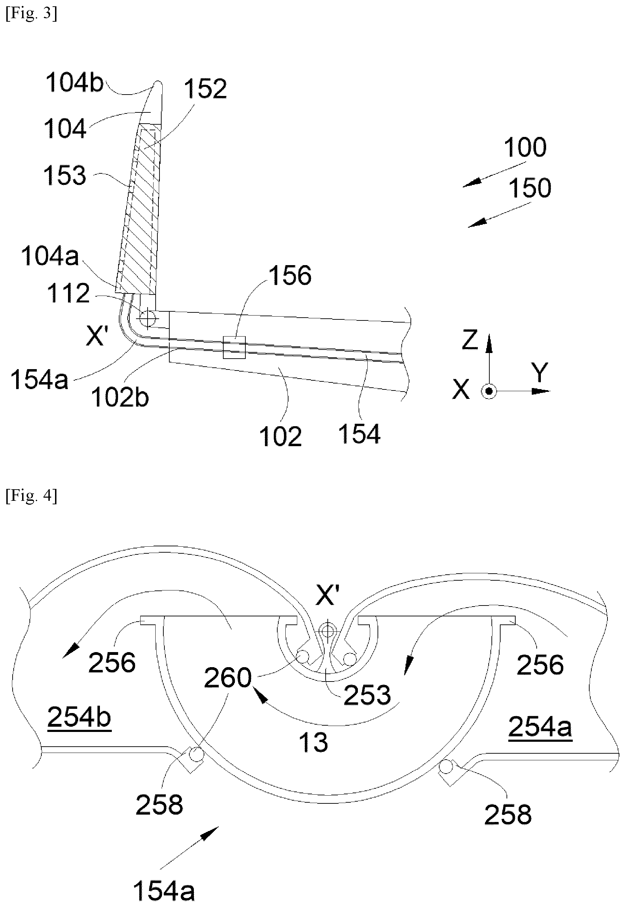

Comme le montre la Fig. 3, le bout d'aile 104 est monté sur l'aile fixe 102 par l'intermédiaire d'une charnière 112 qui assure l'articulation du bout d'aile 104 par rapport à l'aile fixe 102. L'articulation est une rotation autour d'un axe de charnière X' qui est globalement parallèle à l'axe longitudinal X.

Le bout d'aile 104 est mobile entre une position abaissée (Fig. 2) et une position relevée (Fig. 3) et inversement. Classiquement, l'aile 100 comporte les moyens mécaniques nécessaires au déplacement du bout d'aile 104, comme par exemple un système motorisé. De tels moyens mécaniques ne sont pas décrits plus précisément, car ils ne font pas partie de l'invention et un homme du métier peut utiliser différents moyens connus.

Dans la position abaissée, le bout d'aile 104 prolonge l'aile fixe 102 pour former l'aile 100 en position de vol. Dans cette position, l'extrémité proximale 104a du bout d'aile 104 prolonge l'extrémité distale 102b de l'aile fixe 102 et le bout d'aile 104 est également globalement horizontal.

Dans la position relevée, le bout d'aile 104 est basculé vers le haut, c'est-à-dire que l'extrémité distale 104b est soulevée et le bout d'aile 104 est relevé.

La rotation du bout d'aile 104 est classiquement de l'ordre de 90°, mais un angle différent est également possible.

L'aile 100 comporte enfin, un système de dégivrage 150 qui assure le dégivrage du bout d'aile 104 et plus particulièrement de son extrados et de son bord d'attaque 110a.

Comme le montre la Fig. 3, le système de dégivrage 150 comporte un conduit 152 (vu en pointillés sur la Fig. 3) circulant à l'intérieur du bout d'aile 104 au plus près de la zone à dégivrer qui est représentée sur les Figs. 1 à 3 par la zone hachurée.

Selon un mode de réalisation particulier, le conduit 152 débouche à l'extérieur du bout d'aile 104 par des perçages 153 qui sont réalisés au niveau de l'intrados du bout d'aile 104 (sur la Fig. 2, les perçages sont vus par transparence). Ces perçages 153 permettent la circulation de l'air chaud en assurant l'évacuation de l'air chaud qui circule dans le conduit 152 et ainsi assurer le dégivrage de la zone souhaitée sur le bout d'aile 104.

Le système de dégivrage 150 comporte également une conduite d'alimentation 154 qui présente une première extrémité fluidiquement connectée au conduit 152 et une deuxième extrémité fluidiquement connectée à une source d'air chaud 16 de l'aéronef 10 comme par exemple une veine d'un moteur 14. L'air chaud peut également être prélevé sur les moteurs 14 de l'aéronef et acheminé vers le conduit 152, grâce à la conduite d'alimentation 154. Une valve de régulation permet de contrôler le débit d'air chaud acheminé par la conduite 154. La conduite d'alimentation 154 s'étend ainsi, pour partie, dans l'aile fixe 102 et elle traverse l'espace au niveau de la charnière 112 pour rejoindre le conduit 152 auquel elle est fluidiquement connectée pour y conduire l'air chaud. À cette fin, la conduite d'alimentation 154 présente une conduite intermédiaire 154a qui passe de l'extrémité distale 102b de l'aile fixe 102 à l'extrémité proximale 104a du bout d'aile 104.

La conduite intermédiaire 154a est souple pour suivre le mouvement du bout d'aile 104 et l'air chaud arrive ainsi jusqu'au bout d'aile 104 qu'il soit en position abaissée ou en position relevée et il est donc possible avec ce système de dégivrage 150 d'assurer le dégivrage du bout d'aile 104 en vol ou au sol, y compris lorsque le bout d'aile 104 est en position relevée. Dans le mode de réalisation de la Fig. 3, la conduite intermédiaire 154a prend la forme d'un tuyau souple dont une première extrémité est montée au niveau de l'extrémité distale 102b de l'aile fixe 102 et dont une deuxième extrémité est montée au niveau de l'extrémité proximale 104a du bout d'aile 104.

Pour commander la quantité d'air chaud passant dans la conduite d'alimentation 154, le système de dégivrage 150 comporte également des moyens de commande 156 arrangés pour réguler ladite quantité. Ces moyens de commande 156 prennent par exemple la forme d'une électrovanne commandée à distance et en fonction des besoins.

Dans le mode de réalisation de l'invention présenté à la Fig. 3, les moyens de commande 156 sont disposés au niveau de l'aile fixe 102 mais ils peuvent être disposés au niveau du bout d'aile 104 ou au niveau de la source d'air chaud 16 ou des moteurs 14.

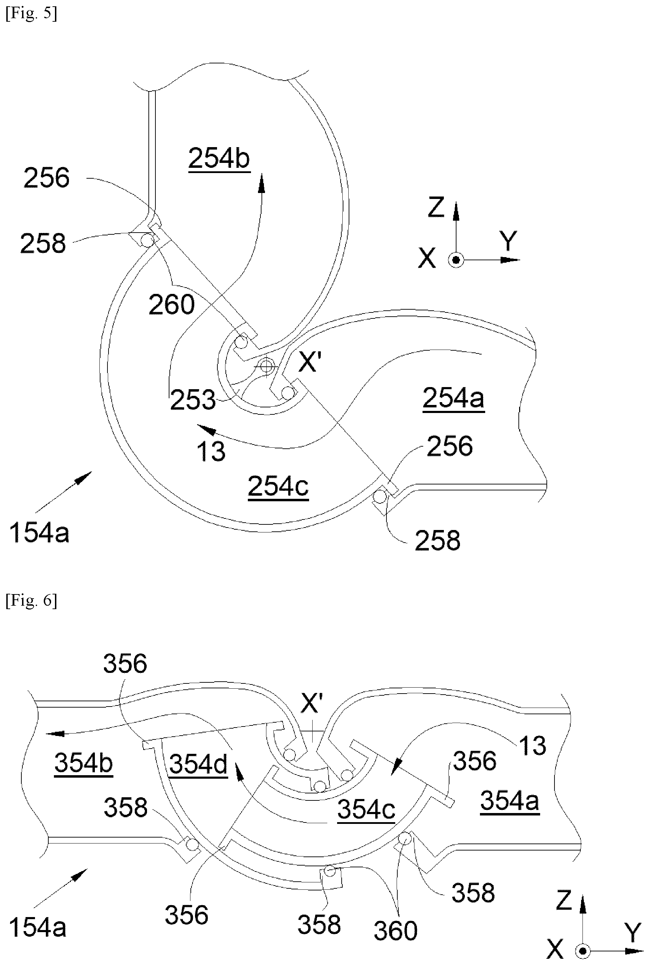

La Fig. 4 et la Fig. 5 montrent un premier mode de réalisation de la conduite intermédiaire 154a. Dans ce mode de réalisation, la conduite intermédiaire 154a comporte une première portion intermédiaire 254a qui est montée au niveau de l'extrémité distale 102b de l'aile fixe 102 et qui est préférentiellement rigide et une deuxième portion intermédiaire 254b qui est montée au niveau de l'extrémité proximale 104a du bout d'aile 104 et qui est préférentiellement rigide. Chaque portion intermédiaire 254a-b est un tube creux dans lequel passe l'air chaud. La première portion intermédiaire 254a prolonge la partie de la conduite d'alimentation 154 qui est dans l'aile fixe 102 et la deuxième portion intermédiaire 254b prolonge le conduit 152.

La conduite intermédiaire 154 comporte également une section intermédiaire 254c en arc de cercle dont une première extrémité est montée articulée au niveau de la première portion intermédiaire 254a et dont une deuxième extrémité est montée articulée au niveau de la deuxième portion intermédiaire 254b. La première extrémité de la section intermédiaire 254c est montée mobile à l'intérieur de la première portion intermédiaire 254a et la deuxième extrémité de la section intermédiaire 254c est montée mobile à l'intérieur de la deuxième portion intermédiaire 254b. La section intermédiaire 254c est également un tube creux.

Du fait de la forme arquée de la section intermédiaire 254c, le passage de la position abaissée à la position relevée consiste en une rotation de la section intermédiaire 254c par rapport à la première portion intermédiaire 254a et la rotation de la deuxième portion intermédiaire 254b par rapport à la section intermédiaire 254c. Une imbrication différente est également possible.

Chaque rotation est globalement centrée sur l'axe de charnière X' et est limitée par des butées 256 de la section intermédiaire 254c qui, en position relevée, viennent en butée contre des contre-butées 258 de la première portion intermédiaire 254a et de la deuxième portion intermédiaire 254b. Dans le mode de réalisation de l'invention présenté à la Fig. 5, la rotation de la section intermédiaire 254c et la rotation de la deuxième portion intermédiaire 254b sont chacune de l'ordre de 45° pour obtenir une position relevée à 90°.

Pour assurer l'étanchéité, un joint 260, en particulier un joint torique, est disposé entre chaque portion intermédiaire 254a-b et la section intermédiaire 254c en venant en appui contre la paroi extérieure de la section intermédiaire 254c. Ici, chaque joint 260 est logé dans une rainure formée dans les contre-butées 258.

Pour aider à la rotation de la section intermédiaire 254c autour de l'axe de charnière X', la conduite intermédiaire 154 présente un bras 253 dont une extrémité distale est solidaire de la section intermédiaire 254c et dont une extrémité proximale est montée mobile en rotation autour de l'axe de charnière X'. En particulier, ici, l'extrémité proximale est montée mobile autour d'un arbre coaxial à l'axe de charnière X', où l'arbre est monté fixe par rapport à la première portion intermédiaire 254a, c'est-à-dire par rapport à l'aile fixe 102.

Les flèches 13 montrent le flux d'air chaud.

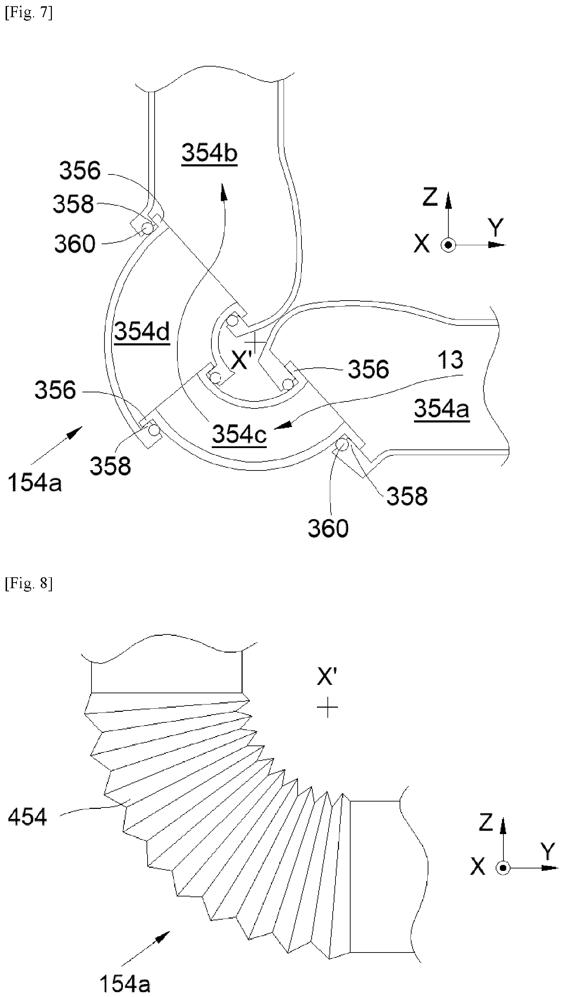

La Fig. 6 et la Fig. 7 montrent un deuxième mode de réalisation de la conduite intermédiaire 154a. Dans ce mode de réalisation, la conduite intermédiaire 154a comporte une première portion intermédiaire 354a qui est montée au niveau de l'extrémité distale 102b de l'aile fixe 102 et qui est préférentiellement rigide et une deuxième portion intermédiaire 354b qui est montée au niveau de l'extrémité proximale 104a du bout d'aile 104 et qui est préférentiellement rigide. Chaque portion intermédiaire 354a-b est un tube creux dans lequel passe l'air chaud. La première portion intermédiaire 354a prolonge la partie de la conduite d'alimentation 154 qui est dans l'aile fixe 102 et la deuxième portion intermédiaire 354b prolonge le conduit 152.

La conduite intermédiaire 154 comporte également au moins deux sections intermédiaires 354c-d. Ici, il y a deux sections intermédiaires, mais il est possible d'en avoir plus si besoin. Chaque section intermédiaire 354c-d est en arc de cercle.

Une première section intermédiaire 354c présente une première extrémité montée articulée au niveau de la première portion intermédiaire 354a et une dernière (ici la deuxième) section intermédiaire 354d présente une deuxième extrémité montée articulée au niveau de la deuxième portion intermédiaire 354b.

Pour deux sections intermédiaires 354c-d voisines, la section intermédiaire 354c de rang inférieur présente une deuxième extrémité montée articulée au niveau d'une première extrémité de la section intermédiaire 354d de rang supérieur.

La première extrémité de la première section intermédiaire 354c est montée mobile à l'intérieur de la première portion intermédiaire 354a et la deuxième extrémité de la dernière section intermédiaire 354d est montée mobile à l'intérieur de la deuxième portion intermédiaire 354b. Chaque deuxième extrémité d'une section intermédiaire 354c de rang inférieur est montée mobile à l'intérieur de la première extrémité de la section intermédiaire 354d de rang juste supérieur. Les sections intermédiaires 354c-d forment ainsi un assemblage télescopique. Une imbrication différente est également possible.

Chaque section intermédiaire 354c-d est également un tube creux.

Du fait de la forme arquée de chaque section intermédiaire 354c-d, le passage de la position abaissée à la position relevée consiste en une rotation de chaque section intermédiaire 354c-d par rapport à la première portion intermédiaire 354a ou par rapport à la section intermédiaire 354c de rang juste inférieur et la rotation de la deuxième portion intermédiaire 354b par rapport à la dernière section intermédiaire 354d.

Chaque rotation est globalement centrée sur l'axe de charnière X' et est limitée par des butées 356 de chaque section intermédiaire 354c-d qui, en position relevée, viennent en butée contre des contre-butées 358 de la première portion intermédiaire 354a, de la deuxième portion intermédiaire 354b et de section intermédiaire 354d de rang juste supérieur. Dans le mode de réalisation de l'invention présenté à la Fig. 7, la rotation globale des sections intermédiaires 354c-d est de l'ordre de 45° et la rotation de la deuxième portion intermédiaire 354b est de l'ordre de 90° pour obtenir une position relevée à 90°.

Pour assurer l'étanchéité, un joint 360, en particulier un joint torique, est disposé contre la paroi extérieure de chaque section intermédiaire 354c-d en venant en appui contre la paroi extérieure de ladite section intermédiaire 354c-d. Ici, chaque joint 360 est logé dans une rainure formée dans les contre-butées 358.

Comme précédemment, pour aider à la rotation de chaque section intermédiaire 354c-d autour de l'axe de charnière X', la conduite intermédiaire 154 présente, pour chaque section intermédiaire 354c-d, un bras (non représenté pour des raisons de clarté des Figs. mais il prend une forme similaire à celui de la Fig. 4) dont une extrémité distale est solidaire de la section intermédiaire 354c-d et dont une extrémité proximale est montée mobile en rotation autour de l'axe de charnière X'. En particulier, chaque extrémité proximale est montée mobile autour d'un arbre coaxial à l'axe de charnière X', où l'arbre est monté fixe par rapport à la première portion intermédiaire 354a, c'est-à-dire par rapport à l'aile fixe 102.

Les flèches 13 montrent le flux d'air chaud.

La Fig. 8 montre un troisième mode de réalisation de la conduite intermédiaire 154a. Dans ce mode de réalisation, la conduite intermédiaire 154a prend la forme d'un tube à soufflet 454 dont une première extrémité est montée au niveau de l'extrémité distale 102b de l'aile fixe 102 et dont une deuxième extrémité est montée au niveau de l'extrémité proximale 104a du bout d'aile 104. Le tube à soufflet 454 est un tube creux dans lequel passe l'air chaud.

La première extrémité prolonge la partie de la conduite d'alimentation 154 qui est dans l'aile fixe 102 et la deuxième extrémité prolonge le conduit 152.

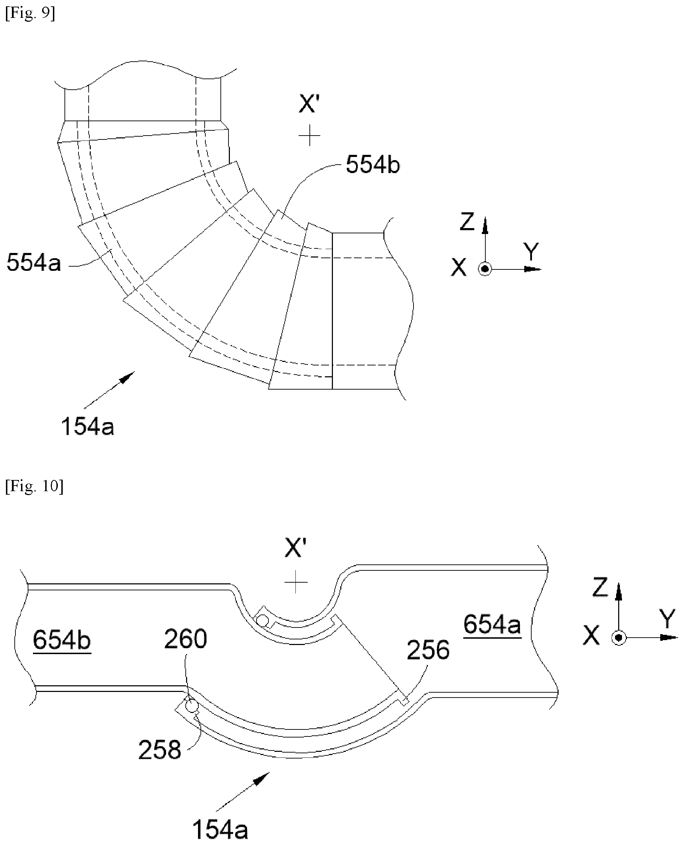

La Fig. 9 montre un quatrième mode de réalisation de la conduite intermédiaire 154a. Dans ce mode de réalisation, la conduite intermédiaire 154a comporte un tube intérieur 554a (ici en pointillés) souple dont une première extrémité est montée au niveau de l'extrémité distale 102b de l'aile fixe 102 et dont une deuxième extrémité est montée au niveau de l'extrémité proximale 104a du bout d'aile 104 et un tube de protection 554b dont une première extrémité est montée au niveau de l'extrémité distale 102b de l'aile fixe 102 et dont une deuxième extrémité est montée au niveau de l'extrémité proximale 104a du bout d'aile 104.

Le tube intérieur 554a est inséré dans le tube de protection 554b qui est un tube télescopique, qui est ici constitué de plusieurs anneaux de forme globalement tronconique, où l'extrémité de petit diamètre de chaque anneau est insérée dans l'extrémité de grand diamètre de l'anneau voisin. Le tube intérieur 554a assure l'étanchéité du dispositif. Le tube de protection 554b permet également, le cas échéant, de contenir la dilatation du tube intérieur 554a.

La Fig. 10 montre un cinquième mode de réalisation de la conduite intermédiaire 154a. Dans ce mode de réalisation, la conduite intermédiaire 154a comporte une première portion intermédiaire 654a qui est montée au niveau de l'extrémité distale 102b de l'aile fixe 102 et qui est préférentiellement rigide et une deuxième portion intermédiaire 654b qui est montée au niveau de l'extrémité proximale 104a du bout d'aile 104 et qui est préférentiellement rigide. Chaque portion intermédiaire 654a-b est un tube creux dans lequel passe l'air chaud. La première portion intermédiaire 654a prolonge la partie de la conduite d'alimentation 154 qui est dans l'aile fixe 102 et la deuxième portion intermédiaire 654b prolonge le conduit 152. Chaque portion intermédiaire 654a-b présente une partie en arc de cercle et l'une des parties en arc de cercle (ici celle la deuxième portion intermédiaire 654b) est logée dans l'autre partie en arc de cercle (ici celle la première portion intermédiaire 654a). Une imbrication inverse est également possible.

Les deux parties en arc de cercle sont coaxiales par rapport à l'axe de charnière X'.

Ainsi, lors de la rotation du bout d'aile 104 de la position abaissée à la position relevée, la deuxième portion intermédiaire 654b pivote autour de l'axe de charnière X' à l'intérieur de la première portion intermédiaire 654a.

La rotation est limitée par des butées 256 de l'une des portions intermédiaires 654b-a qui, en position relevée, viennent en butée contre des contre-butées 258 de l'autre portion intermédiaire 654a-b.

Pour assurer l'étanchéité, un joint 260, en particulier un joint torique, est disposé entre chaque portion intermédiaire 654a-b en venant en appui contre la paroi extérieure de la portion intermédiaire 654b qui est à l'intérieur. Ici, chaque joint 260 est logé dans une rainure formée dans les contre-butées 258 de la première portion intermédiaire 654a.

## Revendications

1. Aile (100) pour un aéronef (10), ladite aile (100) comportant :
- une aile fixe (102) présentant une extrémité proximale (102a) destinée à être fixée à une structure de l'aéronef (10) et une extrémité distale (102b),
- un bout d'aile (104) présentant une extrémité distale (104b) et une extrémité proximale (104a) montée articulée au niveau de l'extrémité distale (102b) de l'aile fixe (102), où le bout d'aile (104) est mobile entre une position abaissée, dans laquelle le bout d'aile (104) prolonge l'aile fixe (102) et une position relevée, dans laquelle le bout d'aile (104) est relevé, et
- un système de dégivrage (150) comportant un conduit (152) circulant à l'intérieur du bout d'aile (104), une conduite d'alimentation (154) fluidiquement connectée audit conduit (152) et destinée à être fluidiquement connectée à une source d'air chaud (16), où ladite conduite d'alimentation (154) présente une conduite intermédiaire (154a) qui passe de l'extrémité distale (102b) de l'aile fixe (102) à l'extrémité proximale (104a) du bout d'aile (104) et des moyens de commande (156) arrangés pour réguler la quantité d'air chaud passant dans la conduite d'alimentation (154).

2. Aile (100) selon la revendication 1, **caractérisée en ce qu'**au niveau de son intrados, le bout d'aile (104) est percé de perçages (153) par lesquels le conduit (152) débouche à l'extérieur du bout d'aile (104).

3. Aile (100) selon l'une des revendications 1 ou 2, **caractérisée en ce que** la conduite intermédiaire (154a) comporte une première portion intermédiaire (254a) montée au niveau de l'extrémité distale (102b) de l'aile fixe (102), une deuxième portion intermédiaire (254b) montée au niveau de l'extrémité proximale (104a) du bout d'aile (104) et une section intermédiaire (254c) en arc de cercle dont une première extrémité est montée articulée au niveau de la première portion intermédiaire (254a) et dont une deuxième extrémité est montée articulée au niveau de la deuxième portion intermédiaire (254b).

4. Aile (100) selon l'une des revendications 1 ou 2, **caractérisée en ce que** la conduite intermédiaire (154a) comporte une première portion intermédiaire (354a) montée au niveau de l'extrémité distale (102b) de l'aile fixe (102), une deuxième portion intermédiaire (354b) montée au niveau de l'extrémité proximale (104a) du bout d'aile (104) et au moins deux sections intermédiaires (354c-d) en arc de cercle, où une première section intermédiaire (354c) présente une première extrémité montée articulée au niveau de la première portion intermédiaire (354a), où une dernière section intermédiaire (354d) présente une deuxième extrémité montée articulée au niveau de la deuxième portion intermédiaire (354b), où pour deux sections intermédiaires (354c-d) voisines, la section intermédiaire (354c) de rang inférieur présente une deuxième extrémité montée articulée au niveau d'une première extrémité de la section intermédiaire (354d) de rang supérieur.

5. Aile (100) selon l'une des revendications 3 ou 4, **caractérisée en ce que** pour chaque section intermédiaire (254c, 354c-d), la conduite d'alimentation (154) comporte un bras (253) dont une extrémité distale est solidaire de la section intermédiaire (254c) et dont une extrémité proximale est montée mobile en rotation autour de l'axe de charnière (X').

6. Aile (100) selon l'une des revendications 1 ou 2, **caractérisée en ce que** la conduite intermédiaire (154a) prend la forme d'un tube à soufflet (454) dont une première extrémité est montée au niveau de l'extrémité distale (102b) de l'aile fixe (102) et dont une deuxième extrémité est montée au niveau de l'extrémité proximale (104a) du bout d'aile (104).

7. Aile (100) selon l'une des revendications 1 ou 2, **caractérisée en ce que** la conduite intermédiaire (154a) comporte un tube intérieur (554a) souple dont une première extrémité est montée au niveau de l'extrémité distale (102b) de l'aile fixe (102) et dont une deuxième extrémité est montée au niveau de l'extrémité proximale (104a) du bout d'aile (104) et un tube de protection (554b) dont une première extrémité est montée au niveau de l'extrémité distale (102b) de l'aile fixe (102) et dont une deuxième extrémité est montée au niveau de l'extrémité proximale (104a) du bout d'aile (104) et dans lequel le tube intérieur (554a) est inséré, où le tube de protection (554b) est un tube télescopique.

8. Aile (100) selon l'une des revendications 1 ou 2, **caractérisée en ce que** la conduite intermédiaire (154a) comporte une première portion intermédiaire (654a) montée au niveau de l'extrémité distale (102b) de l'aile fixe (102) et une deuxième portion intermédiaire (654b) montée au niveau de l'extrémité proximale (104a) du bout d'aile (104), **en ce que** chaque portion intermédiaire (654a-b) présente une partie en arc de cercle coaxiale par rapport à l'axe de charnière (X') et **en ce qu'**une partie en arc de cercle est logée dans l'autre partie en arc de cercle.

9. Aéronef (10) comportant une structure et une aile (100) selon l'une des revendications précédentes, où l'extrémité proximale (102a) de l'aile fixe (102) est fixée à la structure.
